# EUROPÄISCHE PATENTSCHRIFT

(11) **EP 4 363 708 B1**
(45) Veröffentlichungstag und Bekanntmachung des Hinweises auf die Patenterteilung: **07.05.2025**
(21) Anmeldenummer: 22711016.0
(22) Anmeldetag: 07.03.2022
(51) Int. Cl.: F03B 1/00, F03B 11/02

(54) **GEHAEUSE FUER EINE PELTON-TURBINE**
HOUSING FOR A PELTON TURBINE
CARTER DE TURBINE PELTON

(30) Priorität: 30.06.2021 AT 505402021
(43) Veröffentlichungstag der Anmeldung: 08.05.2024
(73) Patentinhaber: Andritz Hydro GmbH, 1120 Wien (AT)
(72) Erfinder: PARKINSON, Etienne, 1072 Forel (Lavaux) (CH); ANDOLFATTO, Loic, 1018 Lausanne (CH); GERVAIS, Nicolas, 25370 Les Longevilles Mt d'Or (FR)
(74) Vertreter: Tschinder, Thomas
(86) Internationale Anmeldenummer: PCT/EP2022/055703
(87) Internationale Veröffentlichungsnummer: WO 2023/274587

(56) Entgegenhaltungen:
- EP-A1- 1 828 596
- EP-A1- 2 064 439
- EP-A2- 2 843 226
- EP-B1- 1 828 596
- EP-B1- 2 064 439
- WO-A1-2008/035979
- CH-A- 100 772
- JP-A- 2019 007 416
- JP-A- H10 176 648

## Beschreibung

Den Gegenstand dieser Erfindung bildet ein Gehäuse für eine Pelton-Turbine, wobei das Gehäuse den Außenumfang eines Pelton-Laufrads umschließt.

Bei Pelton-Turbinen speziell im oberen Leistungsbereich müssen erhebliche Spritzwassermengen aus dem Turbinengehäuse abgeführt werden. Durch die Fliehkräfte des drehenden Laufrades wird eine erhebliche Menge von Wasser an die Gehäuseinnenseite gespritzt. Dieses Spritzwasser sollte dabei nicht auf das Laufrad zurückprallen, sondern idealerweise so abgelenkt werden, dass es das Turbinengehäuse möglichst schnell verlässt.

Im Stand der Technik sind bereits Lösungen bekannt, die die Abfuhr des Spritzwassers unterstützen sollen. So beschreibt die EP1828596A Führungsmittel, die innerhalb des Gehäuses befestigt sind und die das Spritzwasser umlenken und abführen. Derartige Führungsmittel sind meist als Stahlplatten ausgeführt. Hierbei besteht das Risiko, dass es zu unerwünschten Vibrationen der Führungsplatten kommen kann. Im schlimmsten Fall können sich die Platten lösen, beziehungsweise Teile davon und das Laufrad beschädigen.

Ein weiteres Beispiel einer Pelton-Turbine mit einer Spritzwasserableitung ist aus JP 2019 007416 A bekannt.

Der Erfindung liegt daher die Aufgabe zugrunde, ein Gehäuse für eine Pelton-Turbine bereitzustellen durch das das Spritzwasser zügig abgeführt werden kann und das die Verwendung von Führungsplatten vermeidet.

Gelöst wird diese Aufgabe durch ein Gehäuse gemäß Patentanspruch 1.

Erfindungsgemäß sind an der Gehäuseinnenseite Vertiefungen vorgesehen, durch die das vom Laufrad kommende Spritzwasser in eine Richtung parallel zur Drehachse des Laufrades umgelenkt wird und so aus dem Gehäuse abgeführt wird. Dem Spritzwasser wird somit durch die Vertiefungen eine Geschwindigkeitskomponente parallel zur Drehachse der Turbine aufgeprägt, und zwar in Richtung des freien Endes des Laufrades. Vorzugsweise wird das Spritzwasser durch die Vertiefung so umgelenkt, dass es das Gehäuse schraubenförmig verlässt.

Bei dieser Lösung kann es somit nicht mehr zu unerwünschten Vibrationen oder zu Beschädigungen durch losgelöste Führungsplatten kommen. Zudem ist diese Lösung sehr wartungsfreundlich. Bestehende Anlagen können auch mit derartigen Vertiefungen nachgerüstet werden.

Vorzugsweise wird das Gehäuse für eine Pelton-Turbine mit vertikaler Drehachse verwendet, wobei dann das Spritzwasser durch die Vertiefungen nach unten aus dem Gehäuse abgeführt wird.

Es ist günstig, wenn die Vertiefungen schraubenförmig ausgeführt sind, da dadurch das Spritzwasser schraubenförmig entlang der Gehäuseinnseite aus dem Laufradbereich abgeführt wird.

Es ist vorteilhaft, wenn der Querschnitt der Vertiefungen von einem Anfangsbereich, in dem das Spritzwasser auf die Vertiefungen auftrifft, bis zu einem Endbereich, in dem das Spritzwasser die Vertiefungen wieder verlässt, kontinuierlich zunimmt. Die abzuführende Spritzwassermenge nimmt vom Anfangsbereich der Vertiefungen bis zu deren Endbereich stetig zu. Durch die kontinuierliche Querschnittsvergrößerung kann die stetig zunehmende Wassermenge besser abgeleitet werden.

Das Gehäuse kann beispielsweise aus Beton gefertigt sein, wobei die Vertiefungen Aussparungen in der Betonkonstruktion darstellen.

Es ist auch denkbar, dass das Gehäuse aus Metall mit entsprechenden Vertiefungen gefertigt ist.

Im Folgenden wird die Erfindung anhand von Zeichnungen beschrieben. Es zeigen:
Fig. 1 eine schematische Draufsicht auf eine Pelton-Turbine mit dem erfindungsgemäßen Gehäuse;
Fig. 2 eine Schnittansicht von Figur 1;
Fig. 3 eine Schnittansicht wie Figur 2, jedoch ohne Laufrad und Laufradwelle;
Fig. 4 eine Draufsicht auf das erfindungsgemäße Gehäuse ohne Einbauten;
Fig. 5 eine Schnittansicht durch Figur 4;

Gleiche Bezugszeichen in den jeweiligen Figuren bezeichnen jeweils gleiche Anlagenteile.

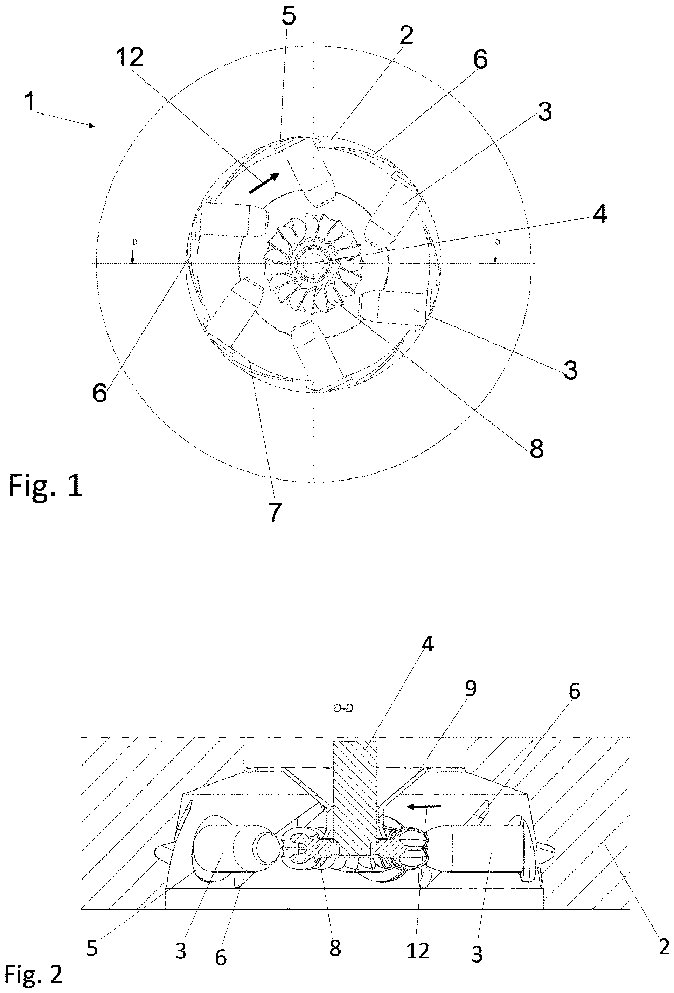

In Figur 1 ist das erfindungsgemäße Gehäuse 2 für die Pelton-Turbine 1 dargestellt. Das Gehäuse 2 umgibt dabei den Außenumfang des Laufrades 8. Im Gehäuse 2 sind hier sechs Öffnungen 5 für die sechs Düsen 3 vorgesehen. Durch die Düsen 3 trifft im Betrieb das Wasser auf das Laufrad 8 und versetzt dieses in Drehung. Das Spritzwasser prallt daraufhin auf die Gehäuseinnenseite 7 und wird dort von den Vertiefungen 6 in der Gehäusewand schraubenförmig schräg nach unten abgelenkt und so aus dem Gehäuse 2 entfernt. Die Vertiefungen 6 verleihen dem Spritzwasser somit eine Geschwindigkeitskomponente in eine Richtung parallel zur vertikalen Laufradachse 4. Somit kann auf die herkömmlichen Leitplatten verzichtet werden.

In Figur 2 erkennt man, dass die Vertiefungen 6 schraubenartig ausgebildet sind. Sie verlaufen entlang der Umfangsrichtung der Gehäuseinnenseite 7 schräg nach unten. Die Umfangsrichtung entspricht hierbei der Rotationsrichtung 12 des Laufrades 8.

Oberhalb des Laufrades 8 ist im Gehäuse 2 ein Konus 9 angeordnet, der das darüber liegende Lager für die Laufradachse 4 vor Spritzwasser schützt.

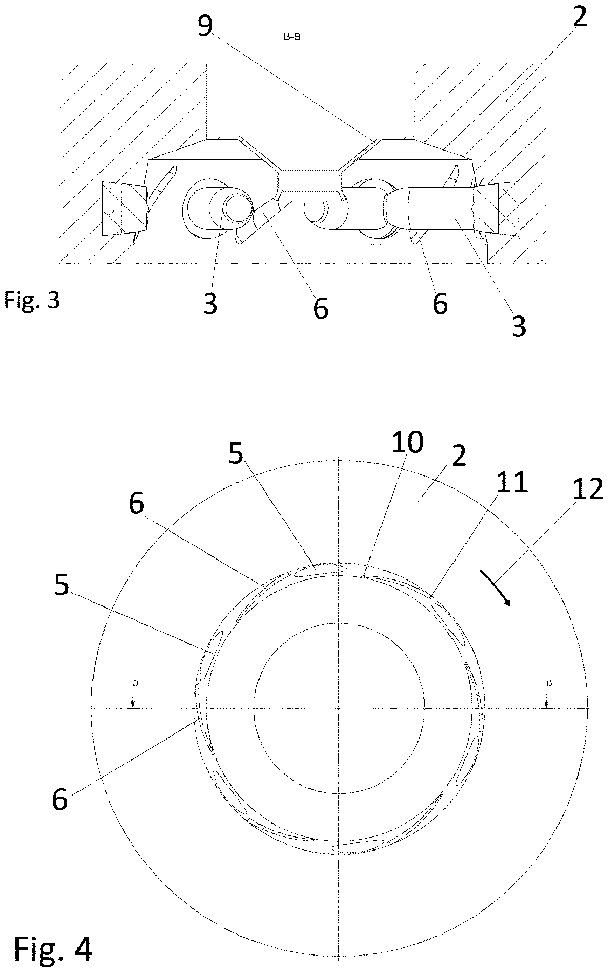

In Figur 3 ist das Gehäuse 2 zur besseren Übersichtlichkeit ohne Laufrad 8 und ohne Laufradachse 4 dargestellt.

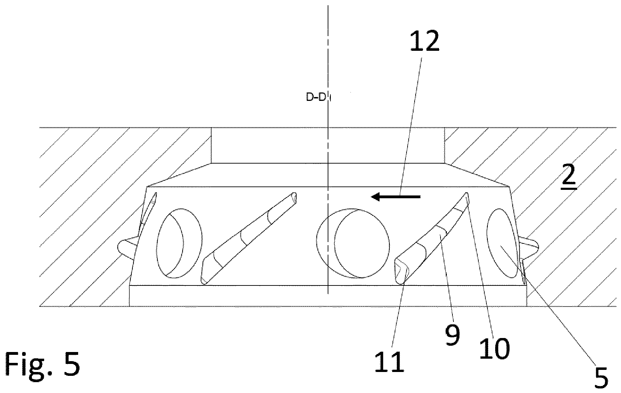

Die Figuren 4 und 5 zeigen das Gehäuse 2 ohne irgendwelche Einbauteile. Hierbei erkennt man gut, dass die Vertiefungen 6 in ihrem Anfangsbereich 10 einen geringeren Querschnitt aufweisen als in ihrem Endbereich 11. Der Anfangsbereich 10 ist dabei der Bereich, in dem das vom Laufrad 8 kommende Spritzwasser in die Vertiefung 6 eintritt und der Endbereich 11 ist jener Bereich, in dem das Spritzwasser die Vertiefung 6 wieder verlässt. Der Endbereich 11 der Vertiefung 6 liegt vorzugsweise unterhalb des Laufrades 8. Im vorliegenden Beispiel sind die Vertiefungen 6 Aussparungen im Beton des Gehäuses 2.

Das Gehäuse 2 kann aber auch mit Metallplatten ausgekleidet sein bzw. vollständig aus Metall bestehen.

### Bezugszeichen

- 1: Pelton-Turbine
- 2: Gehäuse
- 3: Düsen
- 4: Laufradachse
- 5: Öffnungen im Gehäuse 2 für die Düsen 3
- 6: Vertiefungen
- 7: Gehäuseinnenseite
- 8: Laufrad
- 9: Konus
- 10: Anfangsbereich
- 11: Endbereich
- 12: Rotationsrichtung

## Patentansprüche

1. Gehäuse (2) für eine Pelton-Turbine (1), wobei das Gehäuse (2) den Außenumfang eines Laufrads (8) umschließt, **dadurch gekennzeichnet, dass** an der Gehäuseinnenseite (7) Vertiefungen (6) in der Gehäusewand vorgesehen sind, durch die das vom Laufrad (8) kommende Spritzwasser in eine Richtung parallel zur Laufradachse (4) des Laufrades (8) umlenkbar ist und so aus dem Gehäuse (2) abführbar ist.

2. Gehäuse (2) für eine Pelton-Turbine (1) nach Anspruch 1, **dadurch gekennzeichnet, dass** das Gehäuse (2) eine Pelton-Turbine (1) mit vertikaler Laufradachse (4) umschließt und dass die Vertiefungen (6) das Spritzwasser nach unten ablenken.

3. Gehäuse (2) für eine Pelton-Turbine (1) nach Anspruch 1 oder 2, **dadurch gekennzeichnet, dass** die Vertiefungen (6) schraubenförmig ausgeführt sind.

4. Gehäuse (2) für eine Pelton-Turbine (1) nach einem der Ansprüche 1 bis 3, **dadurch gekennzeichnet, dass** der Querschnitt der Vertiefungen (6) von einem Anfangsbereich (10), in dem das Spritzwasser auf die Vertiefungen (6) auftrifft, bis zu einem Endbereich (11), in dem das Spritzwasser die Vertiefungen (6) wieder verlässt, kontinuierlich zunimmt.

5. Gehäuse (2) für eine Pelton-Turbine (1) nach einem der Ansprüche 1 bis 4, **dadurch gekennzeichnet, dass** das Gehäuse (2) aus Beton gefertigt ist und dass die Vertiefungen (6) direkt in den Beton eingearbeitet sind.

## Claims

1. Casing (2) for a Pelton turbine (1), the casing (2) enclosing the outer circumference of a runner (8), **characterized in that** recesses (6) that can deflect the splashing water coming from the runner (8) in a direction parallel to the runner shaft (4) of the runner (8) and thus discharge it from the casing (2) are provided in the casing (2) wall on the inside (7) of the casing (2).

2. Casing (2) for a Pelton turbine (1) according to claim 1, **characterized in that** the casing (2) encloses a Pelton turbine (1) with a vertical runner shaft (4) and **in that** the recesses (6) deflect the splashing water downwards.

3. Casing (2) for a Pelton turbine (1) according to claim 1 or 2, **characterized in that** the recesses (6) are designed with a spiral shape.

4. Casing (2) for a Pelton turbine (1) according to one of claims 1 to 3, **characterized in that** the cross-section of the recesses (6) increases continuously from the beginning (10), where the splashing water hits the recesses (6), to the end (11), where the splashing water leaves the recesses (6) again.

5. Casing (2) for a Pelton turbine (1) according to one of claims 1 to 4, **characterized in that** the casing (2) is made of concrete and the recesses (6) are incorporated directly into the concrete.

## Revendications

1. Bâche (2) pour une turbine Pelton (1), la bâche (2) enveloppant la périphérie extérieure d'une roue (8), **caractérisée en ce que** sur la face intérieure (7) de la bâche sont ménagées des cannelures (6) dans la paroi de la bâche, qui permettent de dévier le jet d'eau provenant de la roue (8) dans une direction parallèle à l'arbre de roue (4) de la roue (8) et l'évacuent ainsi de la bâche (2).

2. Bâche (2) pour une turbine Pelton (1) selon la revendication 1, **caractérisée en ce que** la bâche (2) enveloppe une turbine Pelton (1) dotée d'arbre de roue vertical (4) et **en ce que** les cannelures (6) permettent de dévier le jet d'eau vers le bas.

3. Bâche (2) pour une turbine Pelton (1) selon la revendication 1 ou 2, **caractérisée en ce que** les cannelures (6) se présentent sous forme hélicoïdale.

4. Bâche (2) pour une turbine Pelton (1) selon l'une quelconque des revendications 1 à 3, **caractérisée en ce que** la coupe transversale des cannelures (6) augmente en continu à partir de la zone d'entrée (10), dans laquelle le jet d'eau frappe les cannelures (6), jusqu'à la zone finale (11), dans laquelle le jet d'eau quitte à nouveau les cannelures (6).

5. Bâche (2) pour une turbine Pelton (1) selon l'une quelconque des revendications 1 à 4, **caractérisée en ce que** la bâche (2) est fabriquée en béton et **en ce que** les cannelures (6) sont intégrées directement dans le béton.
